# EUROPÄISCHE PATENTANMELDUNG

(11) **EP 2 600 146 A1**
(43) Veröffentlichungstag der Anmeldung: **05.06.2013**
(21) Anmeldenummer: 11009504.9
(22) Anmeldetag: 01.12.2011
(51) Int. Cl.: G01N 27/62, G01N 1/02

(54) **Probenträger mit Kalibriersubstanz**

(71) Anmelder: EADS Deutschland GmbH, 85521 Ottobrunn (DE)
(72) Erfinder: Göbel, Johann, 81547 München (DE); Kessler, Matthias, 89073 Ulm (DE); Langmeier, Andreas, Dr., 80634 München (DE)

(57) **Zusammenfassung**

Die Erfindung betrifft einen Probenträger zur Aufnahme eines Probenmaterials für ein Gerät zur Stoffanalyse, z.B. ein lonenmobilitätsspektrometer, wobei auf dem Probenträger mindestens eine Kalibriersubstanz vorhanden ist. Ein Verfahren zur Stoffanalyse, wobei mit einem Analysegerät das auf einem erfindungsgemäßen Probenträger vorhandene Probenmaterial analysiert wird, ist ebenfalls Gegenstand der Erfindung.

## Beschreibung

Die Erfindung betrifft einen Probenträger zur Aufnahme eines Probenmaterials für ein Gerät zur Stoffanalyse, z.B. ein lonenmobilitätsspektrometer.

Die Erfassung von Spurenelementen, beispielsweise toxischer oder explosiver Stoffe, gewinnt angesichts der zunehmenden Bedrohung durch terroristische Aktionen immer mehr an Bedeutung. Zur Probenentnahme kann dabei z.B. ein als Wischelement ausgebildeter Probenträger verwendet werden, der über die zu untersuchende Oberfläche gewischt wird (siehe z.B. DE 10 2008 059 112 A1). Der Probenträger kann nach dem Wischvorgang zur weiteren Analyse in ein entsprechendes Analysegerät eingesetzt werden. Als Analysegeräte kommen hier insbesondere lonenmobilitätsspektrometer, Fluoreszenz- oder Lumineszenzsensoren, Rückstreusensoren, Nuklearstrahlungsensoren, etc in Frage, wie z.B. in der US 2009/0035183 für den genannten Einsatz beschrieben.

Die Probenträger können je nach Anwendungsgebiet und Analysegerät aus Papierfasern, Baumwollfasern, Glasfasern oder Metallgewebe bestehen. Sie werden in speziellen Herstellungsverfahren produziert und unter besonderen Bedingungen gelagert. Sie sind frei von Substanzen, die das verwendete analytische Messverfahren beeinflussen. Dazu müssen sowohl bei der Herstellung, dem Transport als auch bei der Lagerung besondere Regeln für den Umgang eingehalten.

Die bekannten analytischen Messgeräte verfügen über ein eingebautes Kalibriersystem. Die Kalibrierung wird regelmäßig durchgeführt. Dafür ist eine eigene Prozedur vorgesehen. Diese wird wahlweise automatisch oder manuell durchgeführt. Wie oft diese Kalibrierung wiederholt werden muss, hängt von der Langzeitstabilität des analytischen Messgerätes ab. Schwankungen der Umwelteinflüsse (Temperatur, Luftdruck oder Feuchte) können eine erneute Kalibrierung notwendig machen. Hauptbestandteile des Kalibriersystem sind mindestens ein Vorratsbehälter für die Kalibriersubstanzen, ein Verteilungssystem (z.B. Gasverschlauchung) und eine Regelungseinheit mit diversen Sensoren und Aktoren zur Regelung des Kalibriersystems. Dieses Kalibriersystem ist fester Bestandteil des betreffenden analytischen Messgeräts, für das sowohl, Wartung und Prüfungen nötig sind.

Der Erfindung liegt die Aufgabe zugrunde, einen Probenträger zu schaffen, mit dem der Geräteaufwand vermindert und die Effizienz des Analysegeräts verbessert wird.

Diese Aufgabe wird mit dem Probenträger nach Anspruch 1 gelöst. Vorteilhafte Ausführungen sowie ein Analyseverfahren unter Verwendung des erfindungsgemäßen Probenträgers sind Gegenstände weiterer Ansprüche.

Erfindungsgemäß wird auf dem Probenträger mindestens eine Kalibriersubstanz vorgesehen, so dass die Funktionalität eines Probenträgers entsprechend erweitert wird. Dazu wird eine definierte Menge einer Kalibriersubstanz, bevorzugt im pg-Bereich, in den Probenträger eingebracht.

Somit wird eine Kalibrierung des Analysegeräts während der Messung der Proben möglich.

Mit der Erfindung wird die Genauigkeit der einzelnen Messungen erhöht, da jede Messung kalibriert werden kann. Darüber hinaus wird der Geräteaufwand erheblich vermindert, da kein eingebautes Kalibriersystem benötigt wird. Auch wird die Effizienz im Betrieb des Analysegeräts gesteigert, da die der Messung vorgelagerten separaten Kalibriervorgänge und die Arbeiten am Kalibriersystem (z.B. Wartung oder Prüfung) entfallen.

Durch eine geeignete Wahl der Kalibriersubstanzen können die Umgebungsbedingungen der Probennahme, zum Beispiel Hintergrundsubstanzen berücksichtigt werden. So können für verschiedene Umgebungen bzw. Zielsubstanzen geeignete Kalibranten gewählt werden. Die Variation der Kalibriersubstanzen ermöglicht nicht nur eine einfache Anpassung an die Umgebung, sondern ermöglicht auch auf verschiedene gesetzliche Regelungen flexibel zu reagieren. Es müssen dann lediglich andere Probenträger verwendet werden. Das bzw. Analysegerät selbst muss nicht verändert werden.

Durch die gewonnene Flexibilität kann die Langzeitstabilität der Messungen bei sich stets verändernden Umwelteinflüssen verbessert werden.

Die erfindungsgemäßen Messstreifen werden insbesondere bereits während der Herstellung mit mindestens einer Kalibriersubstanz angereichert. Die Menge der verwendeten Substanz(en) liegt bevorzugt im pg-Bereich. Es werden vorteilhaft die folgenden Substanzen verwendet:
- Feststoffe, z.B. Naphthalin, Ammoniumsulfat, Nicotinamid, (o, m oder p)-Nitrobenzonitril, Tamoxifen, 5-Nitrovanillin (siehe z.B. WO 2009/088461 A2);
- Flüssigkeiten, z.B. Anisol, Pyridin, Triethylphosphat (TEP, siehe GB2451160A), Perfluorkerosin (PFK, siehe z.B. W02011/106640A2), Perfluorotributylamine (PFTBA, siehe z.B. W02011/106640A2).

Vorteilhaft sind Kalibriersubstanz und Probenmaterial derart gewählt, dass eine chemische Reaktion untereinander ausgeschossen ist.

Je nach verwendeter Substanz ergeben sich unterschiedliche Einsatzgebiete. So sind die oben aufgeführten Substanzen als Kalibriersubstanzen insbesondere für chemische Kampfstoffe, Drogen, Explosivstoffe oder toxische Industriechemikalien einsetzbar.

Die erfindungsgemäßen Probenträger eignen sich für alle Geräte zur Stoffanalyse, insbesondere lonenmobilitätsspektrometer, Fluoreszenz- oder Lumineszenzsensoren, Rückstreusensoren.

Die Erfindung wird anhand mehrerer konkreter Ausführungsbeispiele unter Bezugnahme auf Fig. näher erläutert. Es zeigen:
- Fig. 1: eine erste Ausführung eines erfindungsgemäßen Probenträgers in Draufsicht und in Schnittdarstellung, mit genau einer Kalibriersubstanz;
- Fig. 2: eine zweite Ausführung eines erfindungsgemäßen Probenträgers in Draufsicht und in Schnittdarstellung mit zwei Kalibriersubstanzen, die homogen über den Probenträger verteilt sind;
- Fig. 3: eine dritte Ausführung eines erfindungsgemäßen Probenträgers in Schnittdarstellung mit mehreren Kalibriersubstanzen, die getrennt voneinander innerhalb einzelner Schichten des Probenträgers angeordnet sind;
- Fig. 4: eine vierte Ausführung eines erfindungsgemäßen Probenträgers mit mehreren Kalibriersubstanzen, die getrennt voneinander innerhalb einzelner Kreissegmente eines Probenträgers angeordnet sind;
- Fig. 5: eine fünfte Ausführung eines erfindungsgemäßen Probenträgers mit mehreren Trägersubstanzen, die getrennt voneinander innerhalb mehrerer Segmente des Probenträgers angeordnet sind, wobei die Gesamtfläche dieser Segmente geringer ist als die Fläche des Probenträgers.
- Fig. 6: das Ergebnis einer Messung mit dem erfindungsgemäßen Probenträger.

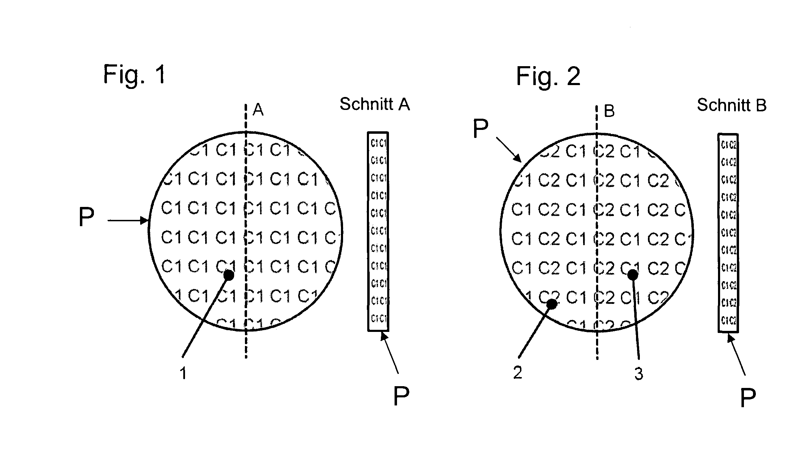

Generell werden die Probenträger (in der Praxis auch als "Messstreifen"; Englisch "Swaps" bezeichnet) bevorzugt rund oder eckig ausgebildet. Es handelt sich dabei um einen Einmalartikel, der nur für eine Messung zum Einsatz kommt. In den gezeigten Ausführungsbeispielen der Fig. 1 bis 5 ist der Probenträger jeweils rund ausgebildet. Selbstverständlich sind neben den runden Ausführungsbeispielen auch weitere Ausführungen möglich. So können neben flachen, 2-dimensionalen auch räumliche, 3-dimensionale Ausführungen verwendet werden. Auch stehen weitere geometrische Formen zur Verfügung, zum Beispiel, rechteckig, dreieckig und jede Kombination aus diesen Formen. Je nach Anwendungsgebiet können zum Beispiel dreieckige Ausführungen besonders gut für die Probennahme in Ecken geeignet sein. Räumlich duktile Ausführungen sind für strukturierte Oberflächen gut geeignet. Zur Darstellung werden hier der Einfachheit halber die flachen runden Ausführungen aufgezeigt.

Fig. 1 zeigt einen ersten erfindungsgemäßen Probenträger P mit genau einer Kalibriersubstanz C1. Die Kalibriersubstanz befindet sich gleichmäßig verteilt im gesamten Meßstreifen, sowohl im Inneren als auch auf der Oberfläche. Die innere Struktur des Meßstreifens stellt dies sicher.

In der Fig. 2 sind auf dem Probenträger P zwei Kalibriersubstanzen C1, C2 vorhanden. Die Kalibriersubstanzen befinden sich gleichmäßig verteilt im gesamten Meßstreifen, sowohl im Inneren als auch auf der Oberfläche (die streifenartig alternierende Verteilung, die sich aus der stark schematischen Darstellung der Fig. 2 ergibt, entspricht also nicht der wahren Verteilung der Kalibriersubstanzen).

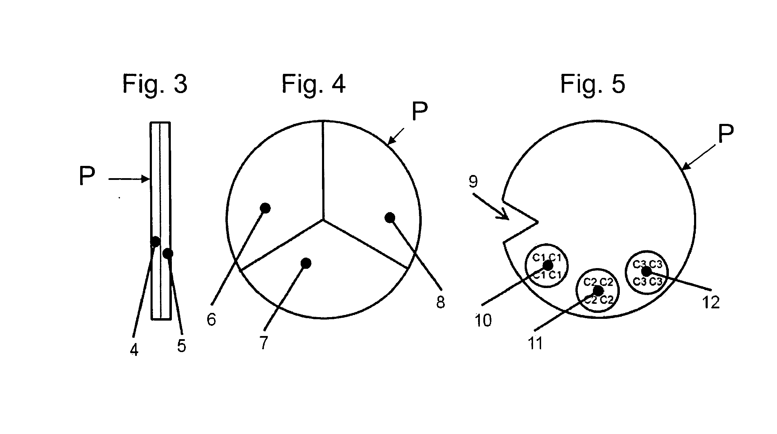

Bei der Verwendung von zwei oder mehr Kalibriersubstanzen können verschiedene Konzentrationsverteilungen angewendet werden. Zum einen können, wie oben beschrieben, die Kalibriersubstanzen homogen verteilt sein. Zum anderen können die Kalibriersubstanzen in verschiedenen Mustern auf die Meßstreifen aufgebracht werden. Drei konkrete Beispiele hierfür sind den Fig. 3 bis 5 dargestellt. Wie oben bereits angemerkt sind auch andere Verteilungen möglich.

In der Schnittdarstellung der Fig. 3 erkennt man, dass die einzelnen Kalibriersubstanzen separat voneinander in verschiedenen Dicken-Schichten vorhanden sind, hier in genau zwei, die die Vorderseite und Rückseite des Probenträgers bilden. Position 4 markiert die Schicht des Probenträgers P, die mit einer ersten Kalibriersubstanz präpariert ist, Position 5 hingegen markiert die Schicht, die mit der zweiten Kalibriersubstanz präpariert ist.

Die Ausführung der Fig. 4 zeigt eine Aufteilung der in diesem Falle drei Kalibriersubstanzen auf die drei Kreissegmente 6,7,8 des kreisförmigen Probenträgers. Entsprechend können bei einer Vielzahl n von Kalibriersubstanzen diese auf n Kreissegmente (Öffnungswinkel: 360°/n) verteilt werden.

Je nach Bedarf können mehr oder weniger Segmente in unterschiedlichen Größen und Aufteilungen aufgebaut werden. Die Messstreifen können in beliebigen geometrischen Formen (Dreiecke, Rechtecke oder Kreise) aufgebaut werden. Diese Segmentierung der Messstreifen kann, unabhängig von der äußeren Form, sowohl zirkular als auch linear aufgebaut werden. Die Segmente, welche Kalibriersubstanzen enthalten, müssen nicht die gesamte Oberfläche eines Probenträgers überdecken. Die einzelnen Segmente müssen nicht unmittelbar aneinander grenzen. Fig. 5 zeigt hierfür ein Beispiel.

Gemäß Fig. 5 sind die drei (allgemein: beliebige Anzahl n) Segmente 10,11,12 der drei verschiedenen Kalibriersubstanzen C1 bis C3 (allgemein C1 bis Cn) relativ klein gegenüber der Gesamtfläche des Probenträgers P gewählt, so dass die Kalibriersubstanzen nur lokal an genau definierten Orten vorhanden sind, während der Rest des Messstreifens frei von Kalibriersubstanzen ist. Diese lokale Positionierung der Kalibriersubstanzen ist besonders vorteilhaft, wenn eine Desorbertechnik eingesetzt wird, die diese Positionen in besonderer Weise unterstützen. So können für diese Positionen besondere Bedingungen (Temperaturen, Temperaturverläufe, Materialien oder Durchflüsse) angewendet werden. In Fig. 5 ist eine Markierung 9 zur genauen Positionierung des Probenträgers während der Analyse vorhanden. Für diese Markierung sind verschiedenen Ausführungen möglich. Es können sowohl Ausschnitte, wie hier exemplarisch dargestellt, als auch Erhöhungen oder magnetische bzw. optische Markierungen verwendet werden.

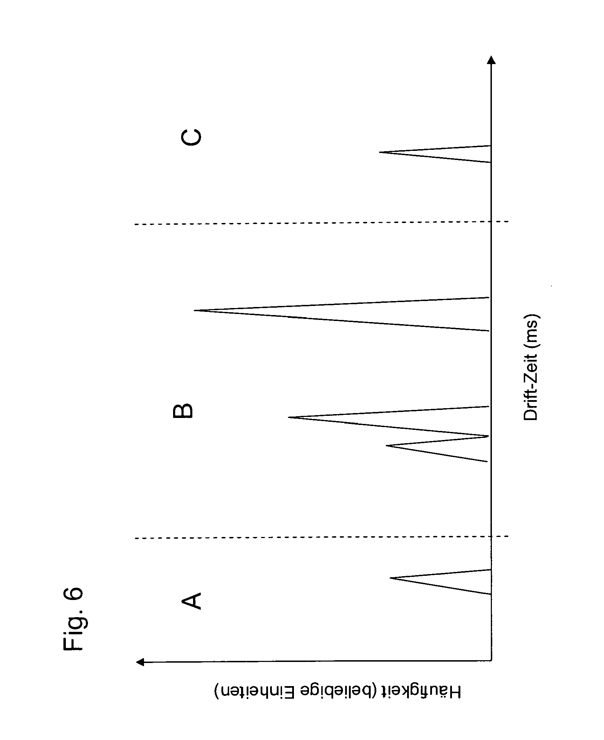

In Fig. 6 ist ein unter Einsatz eines erfindungsgemäßen Probenträgers gewonnenes lonenmobilitätsspektrum in drei verschiedene Bereiche abhängig von der Driftzeit der Ionen eingeteilt. In dem mittleren Bereich B werden die Ionen der untersuchten Moleküle gemessen. Dies ist der eigentliche Messbereich der Stoffanalyse. Der linke Bereich A geringer Driftzeiten und der rechte Bereich C erhöhter Driftzeiten dienen jeweils als Kalibrationsbereiche. Kalibriersubstanzen mit hoher Mobilität werden im linken Bereich A detektiert, Kalibriersubstanzen mit geringer Mobilität hingegen werden im Bereich C detektiert. Durch die Verwendung geeigneter Kalibriersubstanzen mit entsprechender Mobilität, wie oben beispielhaft angegeben, überlagern diese den zentralen Messbereich B nicht, wie man im gezeigten Beispiel in Fig. 6 aus dem Verlauf der Messkurve erkennen kann. Selbstverständlich ist es auch möglich - abhängig von den zu untersuchenden Molekülen und/oder den verwendeten Kalibriersubstanzen - dass beide Kalibrierbereiche im lonenmobilitätsspektrum rechts vom Messbereich liegen (im Bereich längerer Driftzeiten) oder beide Kalibrierbereiche links vom Messbereich liegen (im Bereich kürzerer Driftzeiten). Wichtig ist in diesem Zusammenhang lediglich, dass diese Bereiche eindeutig voneinander getrennt sind.

## Patentansprüche

1. Probenträger zur Aufnahme eines Probenmaterials für ein Gerät zur Stoffanalyse, z.B. ein lonenmobilitätsspektrometer, **dadurch gekennzeichnet, dass** auf dem Probenträger mindestens eine Kalibriersubstanz vorhanden ist.

2. Probenträger nach Anspruch 1, **dadurch gekennzeichnet, dass** eine der Kalibriersubstanzen Naphthalin, Ammoniumsulfat, Nicotinamid, (o, m oder p)-Nitrobenzonitril, Tamoxifen, Anisol, 5-Nitrovanillin, Triethylphosphat, Perfluorkerosin, Perfluorotributylamine oder Pyridin ist.

3. Probenträger nach Anspruch 1 oder 2, **dadurch gekennzeichnet, dass** mindestens eine Kalibriersubstanz sich hinsichtlich einer physikalischen oder chemischen Eigenschaft, hinsichtlich derer das Gerät selektiv ist, von dem Probenmaterial unterscheidet.

4. Probenträger nach einem der vorangehenden Ansprüche, **dadurch gekennzeichnet, dass** die einzelnen Kalibriersubstanzen getrennt voneinander innerhalb unterschiedlicher Segmente des Probenträgers vorhanden sind.

5. Probenträger nach Anspruch 4, **dadurch gekennzeichnet, dass** die Segmente mit den einzelnen Kalibriersubstanzen linear oder zirkular auf dem Probenträger angeordnet sind.

6. Probenträger nach Anspruch 4 oder 5, **dadurch gekennzeichnet, dass** die gesamte Oberfläche oder das gesamte Volumen der Segmente, in denen Kalibriersubstanzen vorhanden sind, einem Bruchteil der Gesamtoberfläche bzw. des Gesamtvolumens des Probenträgers entspricht.

7. Probenträger nach Anspruch 4 oder 5, **dadurch gekennzeichnet, dass** die gesamte Oberfläche oder das gesamte Volumen der Segmente, in denen Kalibriersubstanzen vorhanden sind, der Gesamtoberfläche bzw. dem Gesamtvolumen des Probenträgers entspricht.

8. Probenträger nach einem der vorgehenden Ansprüche, **dadurch gekennzeichnet, dass** die Kalibriersubstanzen getrennt voneinander innerhalb einzelner Schichten des Probenträgers vorhanden sind.

9. Verfahren zur Stoffanalyse, wobei mit einem Analysegerät das auf einem Probenträger nach einem der vorangehenden Ansprüche vorhandene Probenmaterial analysiert wird, **dadurch gekennzeichnet, dass** zeitlich parallel zur Analyse des Probenmaterials eine Kalibrierung des Geräts mit Hilfe der auf dem Probenträger vorhandenen mindestens einen Kalibriersubstanz durchgeführt wird.

10. Verfahren nach Anspruch 9, **dadurch gekennzeichnet, dass** zur Entfernung von Kalibriersubstanzen und Probenmaterial von dem Probenträger ein Desorptionsverfahren angewendet wird, wobei an den Segmenten des Probenträgers, an welchen Kalibriersubstanzen vorhanden sind, verglichen mit den Bereichen des Probenträgers, an welchen Probenmaterial vorhanden ist, unterschiedliche Desorptionsbedingungen eingestellt werden.
